# EUROPEAN PATENT APPLICATION

(11) **EP 4 597 440 A1**
(43) Date of publication of application: **06.08.2025**
(21) Application number: 25154975.4
(22) Date of filing: 30.01.2025
(51) Int. Cl.: G06V 10/25, G06V 10/82, G06V 20/70

(54) **METHOD, APPARATUS, DEVICE, AND STORAGE MEDIUM FOR OBJECT DETECTION**

(30) Priority: 04.02.2024 CN 202410160532
(71) Applicant: BEIJING YOUZHUJU NETWORK TECHNOLOGY CO. LTD., Beijing 101299 (CN)
(72) Inventor: JIANG, Yi, Beijing, 100028 (CN); LIN, Chuang, Beijing, 100028 (CN); YUAN, Zehuan, Beijing, 100028 (CN)
(74) Representative: Grünecker Patent- und Rechtsanwälte PartG mbB

(57) **Abstract**

Provided in the disclosure are a method, an apparatus, a device, and a storage medium for object detection. The method includes: extracting, by using an object detection model, a group of visual feature representations of a target image, the group of visual feature representations including respective visual feature representations of at least one object area in the target image; and generating, by using a language model, a group of text sequences based on the group of visual feature representations, each text sequence indicating at least one category to which an object in an object area corresponding to the visual feature representation belongs.

## Description

### FIELD

Example embodiments of the present disclosure generally relate to the field of computer technologies, and in particular, to a method, an apparatus, a device, and a computer-readable storage medium for object detection.

### BACKGROUND

With the development of Internet technologies, more and more applications or platforms provide image processing functions, which bring great convenience to users. An application or platform with an image processing function may provide an image processing service to a user based on a trained machine learning model. An image recognition task is an important task in an image processing task, and an object detection task is an important task in an image recognition task. It is expected that the accuracy of a detection result generated by executing the object detection task by the machine learning model can be improved.

### SUMMARY

In a first aspect of the present disclosure, a method of object detection is provided. The method includes: extracting, by using an object detection model, a group of visual feature representations of a target image, the group of visual feature representations comprising respective visual feature representations of at least one object area in the target image; and generating, by using a language model, a group of text sequences based on the group of visual feature representations, each text sequence indicating at least one category to which an object in an object area corresponding to the visual feature representation belongs.

In a second aspect of the present disclosure, an apparatus for object detection is provided. The apparatus includes: a visual feature extracting module configured to extract, by using an object detection model, a group of visual feature representations of a target image, the group of visual feature representations comprising respective visual feature representations of at least one object area in the target image; and a text sequence generating module configured to generate, by using a language model, a group of text sequences based on the group of visual feature representations, each text sequence indicating at least one category to which an object in an object area corresponding to the visual feature representation belongs..

In a third aspect of the present disclosure, an electronic device is provided. The device includes at least one processing unit and at least one memory. The at least one memory is coupled to the at least one processing unit and stores instructions executable by the at least one processing unit. The instructions, when executed by the at least one processing unit, cause the device to perform the method in the first aspect.

In a fourth aspect of the present disclosure, a computer-readable storage medium is provided. The medium has a computer program stored thereon. The computer program, when executed by a processor, implements the method in the first aspect.

It should be understood that the content described in this section is not intended to limit the key features or important features of the embodiments of the present disclosure, nor is it intended to limit the scope of the present disclosure. Other features of the present disclosure will become easily understood from the following description.

### BRIEF DESCRIPTION OF THE DRAWINGS

The above and other features, advantages and aspects of various embodiments of the present disclosure will become more apparent when taken in conjunction with the drawings and with reference to the following detailed description. In the drawings, the same or similar reference numerals denote the same or similar elements, where:
Fig. 1 illustrates a schematic diagram of an example environment in which embodiments of the present disclosure can be implemented;
Fig. 2A and Fig. 2B illustrate schematic diagrams of a plurality of examples of object detection;
Fig. 3 illustrates a schematic diagram of an example architecture for object detection according to some embodiments of the present disclosure;
Fig. 4A and Fig. 4B illustrate schematic diagrams of a plurality of examples of model training according to some embodiments of the present disclosure;
Fig. 5 illustrates a flowchart of a process of object detection according to some embodiments of the present disclosure;
Fig. 6 illustrates a schematic block diagram of a structure of an apparatus for object detection according to some embodiments of the present disclosure; and
Fig. 7 illustrates an electronic device in which one or more embodiments of the present disclosure can be implemented.

### DETAILED DESCRIPTION

The embodiments of the present disclosure will be described in more detail below with reference to the drawings. Although some embodiments of the present disclosure are shown in the drawings, it should be understood that the present disclosure may be implemented in various forms and should not be construed as being limited to the embodiments set forth herein. Rather, these embodiments are provided for a thorough and complete understanding of the present disclosure. It should be understood that the drawings and embodiments of the present disclosure are only for illustrative purposes, and are not intended to limit the protection scope of the present disclosure.

In the description of the embodiments of the present disclosure, the term "comprise/include" and its similar terms should be understood as open inclusion, that is, "comprise/include but not limited to". The term "based on" should be understood as "at least partially based on". The term "one embodiment" or "the embodiment" should be understood as "at least one embodiment". The term "some embodiments" should be understood as "at least some embodiments". Other explicit and implicit definitions may also be included below.

It can be understood that the data involved in the technical solutions of the present disclosure (including but not limited to the data itself, the acquisition or use of the data) should comply with the requirements of corresponding laws and regulations and relevant provisions.

It can be understood that before using the technical solutions disclosed in the embodiments of the present disclosure, a user should be informed of the type, scope of use, use scenarios, etc. of personal information involved in the present disclosure in an appropriate manner in accordance with relevant laws and regulations, and the user's authorization should be obtained.

For example, in response to receiving an active request from a user, prompt information is sent to the user to explicitly prompt the user that the operation requested to be performed by the user will require the acquisition and use of the user's personal information, so that the user can independently choose whether to provide the personal information to software or hardware, such as an electronic device, an application, a server or a storage medium, that performs the operation of the technical solution of the present disclosure, according to the prompt information.

As an optional but non-limiting implementation, in response to receiving an active request from the user, the prompt information may be sent to the user in the form of a pop-up window, for example, and the prompt information may be presented in text in the pop-up window. In addition, the pop-up window may also carry a selection control for the user to select whether to "agree" or "disagree" to provide the personal information to the electronic device.

It can be understood that the above process of notifying and obtaining the user's authorization is only illustrative and does not constitute a limitation on the implementations of the present disclosure, and other manners that meet relevant laws and regulations may also be applied to the implementations of the present disclosure.

As used herein, the term "model" may learn an association relationship between a corresponding input and output from training data, so that after the training is completed, a corresponding output may be generated for a given input. The generation of the model may be based on a machine learning technology. Deep learning is a machine learning algorithm that uses multiple processing units to process an input and provide a corresponding output. A neural network model is an example of a model based on deep learning. In this specification, a "model" may also be referred to as a "machine learning model", a "learning model", a "machine learning network" or a "learning network", which are used interchangeably in this specification.

A "neural network" is a machine learning network based on deep learning. The neural network can process an input and provide a corresponding output, and it typically includes an input layer and an output layer, and one or more hidden layers between the input layer and the output layer. A neural network used in deep learning applications usually includes many hidden layers, thereby increasing the depth of the network. The individual layers of the neural network are connected in sequence, so that the output of the previous layer is provided as the input of the next layer, where the input layer receives the input of the neural network, and the output of the output layer is used as the final output of the neural network. Each layer of the neural network includes one or more nodes (also referred to as processing nodes or neurons), and each node processes an input from the previous layer.

Generally speaking, machine learning may generally include three stages: a training stage, a test stage, and an application stage (also referred to as an inference stage). In the training stage, a given model may be trained using a large amount of training data, and parameter values are continuously iteratively updated until the model can obtain consistent inferences that meet an expected target from the training data. Through training, the model may be considered to be able to learn an association (also referred to as an input-to-output mapping) from input to output from the training data. The parameter values of the trained model are determined. In the test stage, a test input is applied to the trained model to test whether the model can provide a correct output, thereby determining the performance of the model. The test stage may sometimes be incorporated into the training stage. In the application or inference stage, the trained model may be used to process an actual model input based on the parameter values obtained from the training, and to determine a corresponding model output.

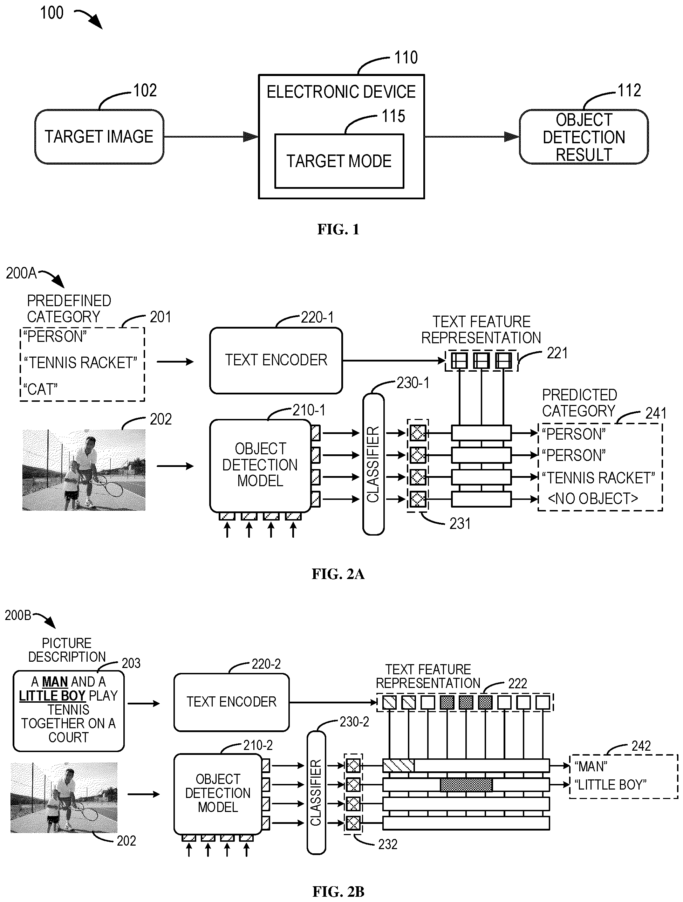

Fig. 1 illustrates a schematic diagram of an example environment 100 in which embodiments of the present disclosure can be implemented. As shown in Fig. 1, the environment 100 may include an electronic device 110.

The electronic device 110 may acquire a target image 102. The target image 102 may be an image of any suitable size, any suitable resolution, and any type (e.g., an RGB image, a grayscale image, and so on). The target image 102 herein may be an image stored locally by the electronic device 110, or may be an image captured by the electronic device 110 in real time (e.g., an image captured by means of a camera). The target image 102 may also be an image acquired by the electronic device 110 from another electronic device (e.g., a remote device), for example. The electronic device 110 may perform an object detection task (which may also be referred to as an area detection task, an object recognition task, and so on) on the target image 102 to determine an object detection result 112 for the target image 102.

The electronic device 110 may perform the object detection task using a trained target model 115, for example. The target model 115 may include, for example but not limited to, any suitable model such as a Transformer model, a convolutional neural network (CNN), a recurrent neural network (RNN), a deep neural network (DNN), and so on. The target model 115 may be a model local to the electronic device 110, or may be a model installed in other electronic devices 110 (e.g., installed in a remote device). It should be noted that the target model 115 may include a plurality of models. For example, the target model 115 may include an object detection model and a language model. According to an actual scenario, the target model 115 may further include other suitable models.

The electronic device 110 may include any computing system with computing power, such as various computing devices/systems, terminal devices, server devices, and so on. The terminal device may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/video camera, a positioning device, a TV receiver, a radio broadcast receiver, an e-book device, a game device, or any combination thereof, including accessories and peripherals of these devices or any combination thereof. The server device may be an independent physical server, or a server cluster or distributed system composed of multiple physical servers, or may be a cloud server that provides basic cloud computing services such as cloud services, cloud databases, cloud computing, cloud functions, cloud storage, network services, cloud communication, middleware services, domain name services, security services, content distribution networks, and big data and artificial intelligence platforms. The server device may include, for example, a computing system/server, such as a mainframe, an edge computing node, a computing device in a cloud environment, and so on.

**It** should be understood that the structure and function of the various elements in the environment 100 are described for illustrative purposes only, without implying any limitation to the scope of the present disclosure.

As briefly mentioned above, an application or platform with an image processing function may provide an image processing service to a user based on a trained machine learning model. An image recognition task is an important task in an image processing task, and an object detection task is an important task in an image recognition task. With the continuous progress and popularization of artificial intelligence technologies, people's expectations for the effect of object detection are also getting higher and higher.

Traditionally, an image to be detected and a text associated with the object are usually provided together to a machine learning model for performing an object detection task. Reference is made to Fig. 2A and Fig. 2B. Fig. 2A and Fig. 2B illustrate schematic diagrams of a plurality of examples (namely, example 200A and example 200B) of object detection. In example 200A, an electronic device that executes the object detection task (hereinafter referred to as a detection device) may acquire an image 202 to be detected and a text 201 indicating predefined categories of the image 202. The text 201 may include a plurality of predefined categories (such as a category "person", a category "tennis racket" and a category "cat" shown in the figure), and the plurality of predefined categories may correspond to different objects in the image 202. The detection device may provide the text 201 to a trained text encoder 220-1, and provide the image 202 to a trained object detection model 210-1.

The text encoder 220-1 may output a text feature representation 221 of the text 201. A model output of the object detection model 210-1 may be, for example, a visual feature representation for the image 202. The model output of the object detection model 210-1 is provided to a classifier 230-1. The classifier 230-1 may perform a classification operation on the model output of the object detection model 210-1 to output visual feature representations (namely, visual feature representations 231) corresponding to respective objects in the image 202. The detection device 110 may perform an alignment operation on the text feature representation 221 and the visual feature representation 231. This process may also be referred to as an alignment process of the predefined categories in the text 201 with the objects in the image 202. The detection device 110 may then determine a detection result 241 corresponding to the image 202 based on the alignment result. The detection result 241 includes predicted categories corresponding to at least one object in the image 202.

Taking the image 202 including four objects and the text 201 including three predefined categories as an example, the detection device 110 may determine the objects matching the three predefined categories among the four objects. For example, for an object with a corresponding predefined category, the detection device may determine the predefined category corresponding to the object in the text 201 as the detection result of the object (that is, the predicted category of the object). For the object without a predefined category, the detection device cannot determine the detection result of the object, and the detection device may determine that there is no detection result of the object, and output the text "<no object>".

In example 200B, the detection device may acquire an image 202 to be detected and a text 203 matching the image 202. The text 203 may be, for example, a picture description of the picture 202. The detection device may provide the text 203 to a trained text encoder 220-2, and provide the image 202 to a trained object detection model 210-2. The text encoder 220-2 may output a text feature representation 222 of the text 201. A model output of the object detection model 210-2 may also be, for example, a visual feature representation of the image 202. The model output of the object detection model 210-2 is provided to a classifier 230-2. The classifier 230-2 may perform a classification operation on the model output of the object detection model 210-2 to output visual feature representations (namely, visual feature representations 232) corresponding to respective objects in the image 202.

The detection device 110 may perform an alignment operation on the text feature representation 222 and the visual feature representation 232. This process may also be referred to as an alignment process of phrases/words in the text 201 with the objects in the image 202. The detection device 110 may then determine a detection result 242 corresponding to the image 202 based on the alignment result. Taking the text 201 as "a man and a little boy play tennis together on a court" as an example, the detection device 110 may determine that there are two objects in the image 202 corresponding to the text "man" and the text "little boy" in the text 201, respectively.

It can be seen that in examples 200A and 200B, the detection device needs to rely on the acquired text when performing object detection on the image 202. The object detection process shown in examples 200A and 200B may be understood as a process of detecting objects corresponding to these categories from the image 202 when it is known which categories are included. If the text lacks a category corresponding to a certain object, the detection device cannot determine the object from the image 202, which may lead to problems such as missed detection and false detection in object detection. This may affect the accuracy of object detection.

In view of this, an improved solution for object detection is proposed according to an embodiment of the present disclosure. In this solution, a group of visual feature representations of a target image is extracted by using an object detection model. The group of visual feature representations includes respective visual feature representations of at least one object area in the target image. A group of text sequences is generated by using a language model, based on the group of visual feature representations. Each text sequence describes at least one category to which an object in an object area corresponding to the visual feature representation belongs.

In the embodiments of the present disclosure, the object detection model is applied to extract visual features and locate object areas from an image, without the need to specifically analyze and determine the categories of the objects. The determination of the object category is completed by using the language model. In this way, with the generation ability and semantic analysis ability of the language model, it is possible to align the objects in the image with the text information of the categories without relying on a text associated with the target image to train a model for object classification. According to the embodiments of the present disclosure, the object detection model can determine more objects in the target image, and the language model can generate a classification result for each object based on the visual feature. This solution can not only reduce the dependence on large-scale training data with category labels, but also improve the comprehensiveness and accuracy of object detection in model application.

Some example embodiments of the present disclosure will be described below with reference to the drawings.

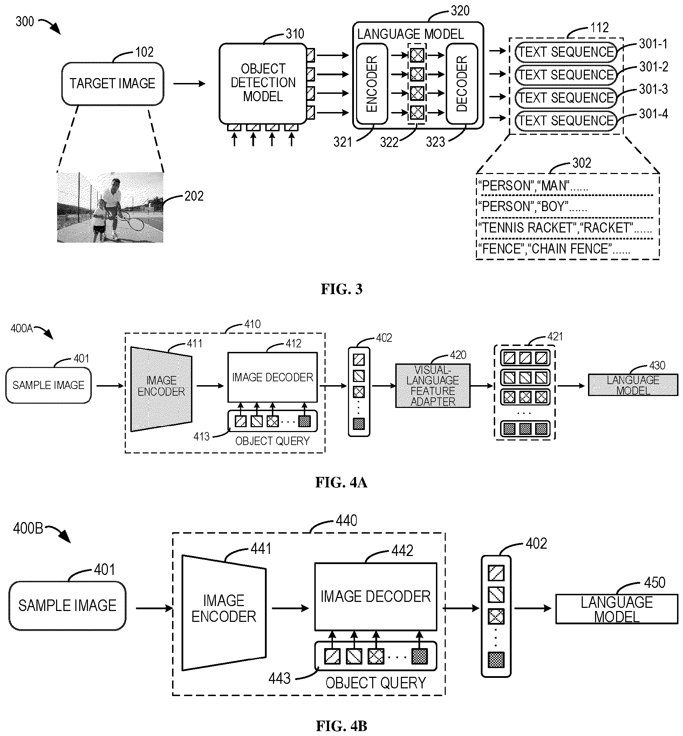

Fig. 3 illustrates a schematic diagram of an example architecture 300 for object detection according to some embodiments of the present disclosure. The architecture 300 may be implemented at the electronic device 110 in Fig. 1. As shown in Fig. 3, the architecture 300 includes an object detection model 310 and a language model 320. The object detection model 310 and the language model 320 may be models included in the target model 115 in Fig. 1. For ease of discussion, the architecture 300 will be described with reference to the environment 100 in Fig. 1.

After acquiring the target image 102, the electronic device 110 may determine the object detection result 112 for the target image 102 by using the trained object detection model 310 and the trained language model 320. Specifically, the electronic device 110 may provide the target image 102 to the object detection model 310. The object detection model 310 may include any suitable model. For example, the object detection model 310 may include, but is not limited to, a Transformer model, a convolutional neural network (CNN), a recurrent neural network (RNN), a deep neural network (DNN), and so on. In some embodiments, the object detection model 310 may be a DETR model, for example.

It should be noted that the object detection model 310 can only recognize position information of each of the at least one object in the target image 102, but cannot recognize a specific category of each object. That is, the object detection model 310 can recognize at least one object area in the target image 102 (each object area only includes one object). Taking the target image 102 as the image 202 and the image 202 including four objects as an example, the object detection model 310 may determine four object areas of the image 202. The object detection model 310 may extract a group of visual feature representations of the target image 102. The group of visual feature representations includes at least one visual feature representation, each of which corresponds to an object area. That is, the group of visual feature representations includes respective visual feature representations of the at least one object area in the target image 102. Each visual feature representation may indicate position information of a corresponding object area, for example.

The electronic device 110 may then provide the group of visual feature representations output by the object detection model 310 to the trained language model 320. In some embodiments, the architecture 300 may further include a visual-language feature adapter (not shown) associated with the language model 320. The visual-language feature adapter may perform a conversion on the group of visual feature representations output by the object detection model 310 to obtain a group of converted feature representations. The visual-language feature adapter may perform any suitable conversion operation on the group of visual feature representations (for example, may perform a dimension conversion), which is not limited in the present disclosure. The group of converted feature representations are feature representations that meet a model input requirement of the language model 320. The model input requirement of the language model 320 indicates at least one condition that a model input to the language model 320 needs to meet. For example, a dimension of the group of converted feature representations meets a dimension condition indicated by the model input requirement of the language model 320. The electronic device 110 and/or the visual-language feature adapter may then provide the group of converted feature representations to the language model 320. In this way, a model input that meets the model input requirement may be provided to the language model 320, which may reduce the possibility of errors in the language model 320 and improve the accuracy of object detection.

The language model 320 may be, for example, a conventional language model (LM), a large language model (LLM), or the like. The language model 320 is a model obtained by learning and training from a large corpus, and has a strong semantic understanding ability. The language model 320 may generate the object detection result 112 based on the group of visual feature representations. The object detection result 112 may include a group of text sequences 301. The number of the group of text sequences 301 may be equal to the number of objects included in the target image 102. For example, if the target image 102 includes four objects, the group of text sequences 301 output by the language model 320 may include four text sequences: a text sequence 301-1, a text sequence 301-2, a text sequence 301-3, and a text sequence 301-4. It can be understood that if the target image 102 includes other number of objects, the group of text sequences 301 output by the language model 320 may further include other number of text sequences. For ease of description, one or more text sequences may be collectively referred to as a text sequence 301.

Each text sequence describes at least one category to which an object in an object area corresponding to the visual feature representation belongs. For example, each text sequence may include at least one text element, and each text element may be, for example, a word or a phrase. Each text element corresponds to one category to which the object in the object area corresponding to the text sequence (which may also be referred to as an object area corresponding to the text sequence, an object corresponding to the text sequence, and so on) belongs. For example, taking the target image 102 as the image 202 and the image 202 including four objects as an example, the detection result 302 for the image 202 output by the model 320 may include four text sequences, that is, a text sequence ["person", "man",...], a text sequence ["person", "boy",...], a text sequence ["tennis racket", "racket",. ..], and a text sequence ["fence", "chain fence",...] shown in Fig. 3.

In some embodiments, the at least one category included in the text sequence corresponding to each object may be referred to as at least one detection result for the object. That is, each text sequence may include at least one detection result of a corresponding object. In some embodiments, each of the group of output sequences has a predetermined length (for example, K), and the at least one detection result corresponding to each object includes a predetermined number (for example, K) of detection results that match the predetermined length. The predetermined length here may be predetermined. The predetermined length may be a length of any duration, and the predetermined number corresponding to it may be any suitable positive integer. Taking the predetermined length = 2 as an example (that is, K = 2), the length of each output sequence output by the language model 320 is 2, that is, each output sequence includes a predetermined number (that is, 2) of detection results that match the predetermined length (that is, each output sequence includes 2 detection results, or it may be said that each output sequence includes 2 categories).

In some embodiments, for each object in the target image 102, the language model 320 may determine a plurality of categories matching the object. The language model 320 may further determine an association degree between each of the plurality of categories and the object, and generate a text sequence for the object based on a plurality of association degrees corresponding to the plurality of categories. Specifically, the language model 320 may determine the plurality of association degrees corresponding to the plurality of categories by determining a semantic correlation between a text feature representation of each of the plurality of categories and a visual feature representation of the object.

For example, the language model 320 may determine a plurality of categories (e.g., four categories: category A, category B, category C, and category D) matching an object A based on an acquired visual feature representation of the object A. The language model 320 may determine a text feature representation of each category. The language model 320 may determine a semantic correlation between the text feature representation of each category and the acquired visual feature representation of the object A. The language model 320 may rank the plurality of categories in a descending order based on the semantic correlation corresponding to the text feature representation of each category, for example. The language model 320 may generate a text sequence corresponding to the object A based on the ranking of the plurality of categories. For example, if the semantic correlation corresponding to category A > the semantic correlation corresponding to category B > the semantic correlation corresponding to category C > the semantic correlation corresponding to category D, the text sequence for the object A output by the language model 320 may be ["category A", "category B", "category C", "category D"].

In some embodiments, if each output sequence has a predetermined length, and the predetermined length is 2, the text sequence output by the language model 320 may include the top two categories in the ranking of the plurality of categories. That is, in this case, the text sequence for the object A output by the language model 320 may be ["category A", "category B"].

In some embodiments, the electronic device 110 may further provide the object detection result 112 for the target image 102. The object detection result 112 may indicate the at least one object area that is located from the target object 102 by the object detection model 310 and the text sequence corresponding to each object area that is generated by the language model 320. For example, the electronic device 110 may provide the object detection result 112 by identifying the at least one object area in the target object 102 and presenting the corresponding text sequence associated with each object area. The electronic device 110 may identify the at least one object area in any suitable way (for example, by adding a border to each object area), which is not limited in the present disclosure. For example, for an object A of the target object, the corresponding text sequence of which is ["category A", "category B"], the electronic device 110 may identify the object area of the object A in the target image 102, and present the text sequence ["category A", "category B"] associated with the object area. The text sequence may be superimposed and presented on the object area, for example, or may be presented at any position near the object area.

The above has described in detail the detailed process of using the object detection model and the language model by the electronic device 110 to determine the object detection result corresponding to the target image. The training manner of the object detection model and the language model will continue to be described below. In some embodiments, the object detection model and the language model may be trained at the electronic device 110, or may be trained at another electronic device (for example, a remote electronic device). For ease of description, an electronic device that trains the object detection model and the language model will be referred to as a training device below. That is, the object detection model and the language model are trained at the training device, and the electronic device 110 may acquire the trained object detection model and language model from the training device to perform the above object detection process.

In some embodiments, the training device needs to train at least the object detection model (that is, the language model may be pre-trained, or may be jointly trained with the object detection model). Fig. 4A and Fig. 4B illustrate schematic diagrams of a plurality of examples (namely, example 400A and example 400B) of model training according to some embodiments of the present disclosure. Both example 400A and example 400B may be implemented at the training device. Example 400A shows a case where the object detection model 410 and the language model 430 are both trained models. Example 400B shows a case where the object detection model 440 and the language model 450 are jointly trained.

In example 400A, the object detection model 410 includes an image encoder 411 and an image decoder 412. The training device may fix the parameters of the image encoder 411 in the object detection model 410 and the parameters of the trained language model 430, and the training device may train the object detection model 410 only by updating the parameters of the image decoder 412. In example 400A, the training device may extract, by using the object detection model 410, a group of sample visual feature representations 402 of a sample image 401 (which may be any sample image in the training dataset). Specifically, the image encoder 411 with fixed parameters may output a visual feature representation of the sample image 401. The image decoder 412 may decode a group of sample visual feature representations 402 based on the visual feature representation of the sample image 401 and an object query 413. The object query 413 is determined based on the sample image 401.

The group of sample visual feature representations 402 includes respective sample visual feature representations of at least one object area in the sample image 401. The training device may perform, by using a visual-language feature adapter 420 associated with the language model 430, a conversion on the group of sample visual feature representations to obtain a group of converted sample visual feature representations 421, and provide the group of converted sample visual feature representations 421 to the language model 430. The visual-language feature adapter 420 may also be trained, and during the process of training the object detection model 410, the parameters of the visual-language feature adapter 420 are also fixed. The training device may generate, by using the language model 430, a group of predicted text sequences based on the group of sample visual feature representations 402, each predicted text sequence indicating at least one estimated category to which an object in an object area corresponding to the sample visual feature representation belongs.

In example 400A, the object detection model 440 includes an image encoder 441 and an image decoder 442. The training device may jointly train the object detection model 440 and the language model 450. In example 400B, the training device may extract, by using the object detection model 440, a group of sample visual feature representations 402 of a sample image 401 (which may be any sample image in the training dataset). Specifically, the image encoder 441 may output a visual feature representation for the sample image 401. The image decoder 442 may decode a group of sample visual feature representations 402 based on the visual feature representation of the sample image 401 and an object query 443. The object query 443 is determined based on the sample image 401.

The group of sample visual feature representations 402 includes respective sample visual feature representations of at least one object area in the sample image 401. The training device may directly provide the group of sample visual feature representations 402 to the language model 450. The training device may generate, by using the language model 450, a group of predicted text sequences based on the group of sample visual feature representations 402, each predicted text sequence indicating at least one estimated category to which an object in an object area corresponding to the sample visual feature representation belongs.

In some embodiments, whether or not the language model needs to be trained, the training device may use a two-stage training manner to train at least the object detection model, for example. In a first training stage, due to the problem that manually labeled data has incomplete labeling and high labor cost, the training device may acquire a first training dataset with less labeling information. The first training dataset includes a first sample image, ground-truth position information of an object area in the first sample image (which may include ground-truth position information corresponding to each of the at least one object area in the first sample image), and a sample category to which an object belongs (which may include at least one sample category to which each of the at least one object in the first sample image belongs, and each object may belong to at least one sample category). The first sample image here may be any sample image in the first training dataset, the first training dataset includes a plurality of sample images, and the training device may adopt the following training manner for each sample image. The training device may determine first estimated position information and a first estimated category of the object area in the first sample image by providing the first sample image to the object detection model and the language model.

For example, the training device may provide the first sample image to the object detection model to extract, by using the object detection model, a first group of sample visual feature representations of the first sample image. The first group of sample visual feature representations includes respective sample visual feature representations of at least one object area in the first sample image. The training device and/or the object detection model may determine, for example, first estimated position information corresponding to the at least one object area in the first sample image based on the first group of sample visual feature representations. For example, the training device and/or the object detection model may perform a decoding operation on the first group of sample visual feature representations to determine the first estimated position information corresponding to the at least one object area. The first estimated position information may include a plurality of pieces of estimated position information, and each piece of estimated position information is estimated position information corresponding to one object area in the first sample image.

The training device may then provide the first group of sample visual feature representations to the language model to generate, by using the language model, a first group of predicted text sequences based on the first group of sample visual feature representations, the first group of predicted text sequences including at least one predicted text sequence, and each predicted text sequence indicating at least one estimated category to which an object in an object area corresponding to the sample visual feature representation belongs. The training device may determine the at least one estimated category corresponding to the first group of predicted text sequences (that is, an entirety of the at least one estimated category described in each predicted text sequence in the first group of predicted text sequences) as a first estimated category.

The training device may then update the object detection model based on a first distance loss between the first estimated position information and the ground-truth position information and a first semantic loss between the sample category and the first estimated category. Specifically, for each object in the first sample image, the training device may update the object detection model based on a first distance loss between the ground-truth position information and the estimated position information of the object area of the object and a first semantic loss between the at least one estimated category to which the object belongs and the at least one sample category. The training device may adopt any suitable manner to determine the distance loss and the semantic loss, and the present disclosure does not limit the specific manner for determining the two losses. For example, if one estimated category corresponding to an object A is "person" and one sample category corresponding to the object A is "man", the training device may determine a semantic loss between the two categories based on the semantics of the category "person" and the category "man". The training device may at least train the object detection model by reducing the first distance loss and the first semantic loss. For example, the training device may determine that the first training stage is completed in response to the first distance loss and the first semantic loss both reaching a first estimated target.

In a second training stage, the training device may again provide the first sample image to the object detection model and the language model that have undergone the first training stage. The training device may acquire a second group of predicted text sequences output by the object detection model and the language model that have undergone the first training stage. Each predicted text sequence in the second group of predicted text sequences describes at least one estimated category to which an object in an object area corresponding to the sample visual feature representation belongs. The training device may determine the at least one estimated category corresponding to the second group of predicted text sequences (that is, an entirety of the at least one estimated category described in each predicted text sequence in the second group of predicted text sequences) as a pseudo-label category for the first sample image. The pseudo-label category is different from the sample category. For example, the pseudo-label category includes at least one estimated category, and the at least one estimated category is different from the at least one sample category included in the sample category.

With regard to the specific manner of determining the pseudo-label category different from the sample category, in some embodiments, the language model may learn categories corresponding to objects of the same type in different sample images during the training process. The language model may determine a plurality of categories corresponding to objects of a certain type through a lot of learning. For example, if a sample image A includes an object A, a sample image B includes an object B, the object A and the object B belong to the same type (or the similarity between the object A and the object B is greater than a threshold), the sample category corresponding to the object A is category A, and the sample category corresponding to the object B is category B, then a trained language model may determine that both the object A and the object B may correspond to the category A and the category B. The language model may generate, for example, a text sequence that may at least describe the category B based on a visual feature representation of the object A.

The training device may again determine second estimated position information and a second estimated category of the object area in the first sample image by providing the first sample image to the updated object detection model and the language model. For the manner in which the training device determines the second estimated position information and the second estimated category, reference may be made to the above manner of determining the first estimated position information and the first estimated category, and details will not be repeated here. The training device may update the object detection model based on a second distance loss between the second estimated position information and the ground-truth position information and a second semantic loss between the sample category and the pseudo-label category and the second estimated category. It should be noted that if the sample category and the pseudo-label category are referred to as an updated sample category, the training device may determine a second semantic loss between the updated sample category and the second estimated category. Similarly, the training device may at least train the object detection model by reducing the second distance loss and the second semantic loss. For example, the training device may determine that the second training stage is completed in response to the second distance loss and the second semantic loss both reaching a second estimated target.

In conclusion, in the embodiments of the present disclosure, with the generation ability and semantic analysis ability of the language model, it is possible to align the objects in the image with the text information of the category without relying on a text associated with the target image to train a model for object classification. According to the embodiments of the present disclosure, the object detection model can determine more objects in the target image, and the language model can generate a classification result for each object based on the visual feature. This solution can not only reduce the dependence on large-scale training data with category labels, but also improve the comprehensiveness and accuracy of object detection in model application.

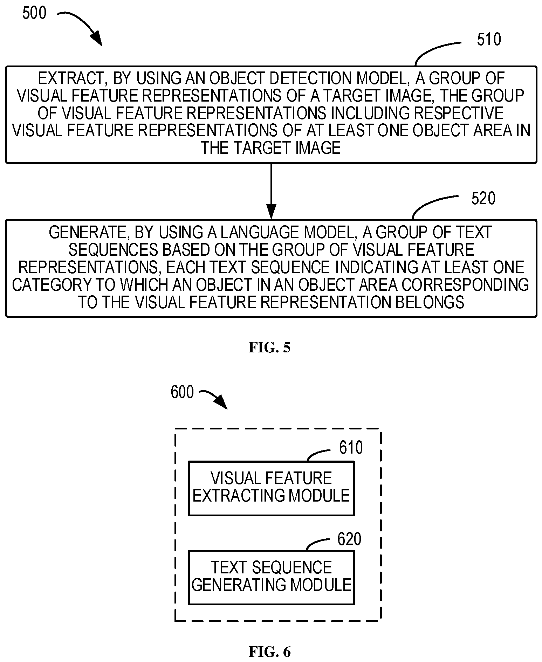

Fig. 5 illustrates a flowchart of a process 500 of object detection according to some embodiments of the present disclosure. The process 500 may be implemented at the electronic device 110. The process 500 will be described below with reference to Fig. 1.

At block 510, the electronic device 110 extracts, by using an object detection model, a group of visual feature representations of a target image, the group of visual feature representations including respective visual feature representations of at least one object area in the target image.

At block 520, the electronic device 110 generates, by using a language model, a group of text sequences based on the group of visual feature representations, each text sequence indicating at least one category to which an object in an object area corresponding to the visual feature representation belongs.

In some embodiments, each output sequence of the group of output sequences has a predetermined length, and the at least one detection result corresponding to each object includes a predetermined number of detection results that match the predetermined length.

In some embodiments, the language model outputs the group of output sequences by: generating, for each visual feature representation, a text sequence corresponding to the visual feature representation based on a semantic correlation between the visual feature representation and a text feature representation of a category.

In some embodiments, generating, by using the language model, the group of text sequences based on the group of visual feature representations includes: performing, by using a visual-language feature adapter associated with the language model, a conversion on the group of visual feature representations to obtain a group of converted feature representations; and obtaining, by providing the group of converted feature representations to the language model, the group of text sequences generated by the language model.

In some embodiments, the language model and the visual-language feature adapter are trained, and during a training process of the object detection model, parameters of the trained language model and the trained visual-language feature adapter are fixed.

In some embodiments, the object detection model includes an image encoder and an image decoder, and the image encoder is trained and a parameter of the image encoder is fixed during the training process of the object detection model.

In some embodiments, the object detection model and the language model are jointly trained.

In some embodiments, at least the object detection model is trained by: obtaining a first training dataset, the first training dataset including a first sample image, ground-truth position information of an object area in the first sample image, and a sample category to which an object belongs; determining, by providing the first sample image to the object detection model and the language model, first estimated position information and a first estimated category of the object area in the first sample image; and updating the object detection model based on a first distance loss between the first estimated position information and the ground-truth position information and a first semantic loss between the sample category and the first estimated category.

In some embodiments, at least the object detection model is trained by: obtaining, by providing the first sample image to the updated object detection model and the language model, a pseudo-label category output by the language model, the pseudo-label category being different from the sample category; determining, by providing the first sample image to the updated object detection model and the language model, second estimated position information and a second estimated category of the object area in the first sample image; and updating the object detection model based on a second distance loss between the second estimated position information and the ground-truth position information and a second semantic loss between the sample category and the second estimated category and a second semantic loss between the pseudo-label category and the second estimated category.

**In** some embodiments, the process 500 further includes: providing an object detection result for the target image, the object detection result indicating the at least one object area that is located from the target object by the object detection model and the text sequence corresponding to each object area that is generated by the language model.

The embodiments of the present disclosure further provide corresponding apparatuses for implementing the above methods or processes. Fig. 6 illustrates a schematic block diagram of a structure of an apparatus 600 for object detection according to some embodiments of the present disclosure. The apparatus 600 may be implemented as or included in the electronic device 110 in Fig. 1. The individual modules/components in the apparatus 600 may be implemented by hardware, software, firmware or any combination thereof.

As shown in the figure, the apparatus 600 includes a visual feature extracting module 610 configured to extract, by using an object detection model, a group of visual feature representations of a target image, the group of visual feature representations including respective visual feature representations of at least one object area in the target image. The apparatus 600 further includes a text sequence generating module 620 configured to generate, by using a language model, a group of text sequences based on the group of visual feature representations, each text sequence indicating at least one category to which an object in an object area corresponding to the visual feature representation belongs.

In some embodiments, each sequence of the group of output sequences has a predetermined length, and the at least one detection result corresponding to each object includes a predetermined number of detection results that match the predetermined length.

In some embodiments, the language model outputs the group of output sequences by: generating, for each visual feature representation, a text sequence corresponding to the visual feature representation based on a semantic correlation between the visual feature representation and a text feature representation of a category.

In some embodiments, the text sequence generating module 620 includes: a conversion feature obtaining module configured to perform, by using a visual-language feature adapter associated with the language model, a conversion on the group of visual feature representations to obtain a group of converted feature representations; and a feature providing module configured to obtain, by providing the group of converted feature representations to the language model, the group of text sequences generated by the language model.

In some embodiments, the language model and the visual-language feature adapter are trained, and during a training process of the object detection model, parameters of the trained language model and the trained visual-language feature adapter are fixed.

In some embodiments, the object detection model includes an image encoder and an image decoder, and the image encoder is trained and a parameter of the image encoder is fixed during the training process of the object detection model.

In some embodiments, the object detection model and the language model are jointly trained.

In some embodiments, at least the object detection model is trained by: obtaining a first training dataset, the first training dataset including a first sample image, ground-truth position information of an object area in the first sample image, and a sample category to which an object belongs; determining, by providing the first sample image to the object detection model and the language model, first estimated position information and a first estimated category of the object area in the first sample image; and updating the object detection model based on a first distance loss between the first estimated position information and the ground-truth position information and a first semantic loss between the sample category and the first estimated category.

In some embodiments, at least the object detection model is trained by: obtaining, by providing the first sample image to the updated object detection model and the language model, a pseudo-label category output by the language model, the pseudo-label category being different from the sample category; determining, by providing the first sample image to the updated object detection model and the language model, second estimated position information and a second estimated category of the object area in the first sample image; and updating the object detection model based on a second distance loss between the second estimated position information and the ground-truth position information, a second semantic loss between the sample category and the second estimated category and a second semantic loss the pseudo-label category and the second estimated category.

In some embodiments, the apparatus 600 further includes: a result providing module configured to provide an object detection result for the target image, the object detection result indicating the at least one object area that is located from the target object by the object detection model and the text sequence corresponding to each object area that is generated by the language model.

The units and/or modules included in the apparatus 600 may be implemented in various ways, including software, hardware, firmware, or any combination thereof. In some embodiments, one or more units and/or modules may be implemented using software and/or firmware, such as machine-executable instructions stored on a storage medium. In addition to or as an alternative to the machine-executable instructions, some or all of the units and/or modules in the apparatus 600 may be implemented at least partially by one or more hardware logic components. As an example, rather than a limitation, example types of hardware logic components that may be used include a field programmable gate array (FPGA), an application specific integrated circuit (ASIC), an application specific standard product (ASSP), a system on chip (SOC), a complex programmable logic device (CPLD), etc.

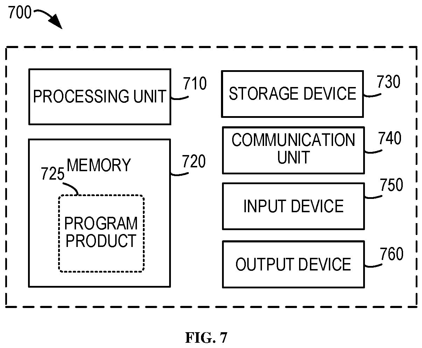

Fig. 7 illustrates a block diagram of an electronic device 700 in which one or more embodiments of the present disclosure may be implemented. It should be understood that the electronic device 700 shown in Fig. 7 is only an example, and should not constitute any limitation to the function and scope of the embodiments described herein. The electronic device 700 shown in Fig. 7 may be used to implement the electronic device 110 in Fig. 1 or the apparatus 600 in Fig. 6.

As shown in Fig. 7, the electronic device 700 is in the form of a general-purpose computing device. The components of the electronic device 700 may include, but are not limited to, one or more processors or processing units 710, a memory 720, a storage device 730, one or more communication units 740, one or more input devices 750, and one or more output devices 760. The processing unit 710 may be a physical or virtual processor and may perform various processes according to a program stored in the memory 720. In a multiprocessor system, a plurality of processing units executes computer executable instructions in parallel to improve parallel processing capability of the electronic device 700.

The electronic device 700 typically includes a plurality of computer storage medium. Such medium may be any available medium accessible by the electronic device 700, including but not limited to, volatile and non-volatile medium, and detachable and non-detachable medium. The memory 720 may be a volatile memory (e.g., a register, a cache, a random-access memory (RAM)), a non-volatile memory (e.g., a read-only memory (ROM), an electrically erasable programmable read-only memory (EEPROM), a flash memory), or any combination thereof. The storage device 730 may be a removable or non-removable medium, and may include a machine-readable medium, such as a flash drive, a disk, or any other medium, which may be capable of storing information and/or data and accessible within the electronic device 700.

The electronic device 700 may further include additional removable/non-removable, volatile/non-volatile storage medium. Although not shown in Fig. 7, it is possible to provide a disk drive for reading from or writing to a removable, non-volatile disk (e.g., a "floppy disk") and an optical disk drive for reading from or writing to a removable, non-volatile optical disk. In these cases, each drive may be connected to the bus (not shown) by one or more data medium interfaces. The memory 720 may include a computer program product 725 having one or more program modules, which are configured to perform various methods or actions of various embodiments of the present disclosure.

The communication unit 740 implements communication with other electronic devices through a communication medium. Additionally, the functionality of the components of the electronic device 700 may be implemented by a single computing cluster or multiple computing machines, which are capable of communicating through communication connections. Therefore, the electronic device 700 may operate in a networked environment using a logical connection to one or more other servers, network personal computers (PCs), or another network node.

The input device 750 may be one or more input devices, such as a mouse, a keyboard, a trackball, etc. The output device 760 may be one or more output devices, such as a display, a speaker, a printer, etc. The electronic device 700 may also communicate with one or more external devices (not shown), such as storage devices, display devices, etc., through the communication unit 740 as required, communicate with one or more devices that enable a user to interact with the electronic device 700, or communicate with any device (e.g., a network card, a modem, etc.) that enables the electronic device 700 to communicate with one or more other electronic devices. Such communication may be performed via an input/output (I/O) interface (not shown).

According to an example implementation of the present disclosure, a computer-readable storage medium is provided, having computer-executable instructions stored thereon, where the computer-executable instructions are executed by a processor to implement the above-described method. According to an example implementation of the present disclosure, a computer program product is further provided, which is tangibly stored on a non-transitory computer-readable medium and includes computer-executable instructions, and the computer-executable instructions are executed by a processor to implement the above-described method.

Various aspects of the present disclosure are described herein with reference to the flowcharts and/or block diagrams of the methods, apparatuses, devices, and computer program products implemented according to the present disclosure. It should be understood that each block of the flowcharts and/or block diagrams and the combination of blocks in the flowcharts and/or block diagrams may be implemented by computer-readable program instructions.

These computer-readable program instructions may be provided to a processing unit of a general-purpose computer, a special-purpose computer, or other programmable data processing apparatus, so as to produce a machine, such that the instructions, when executed by the processing unit of the computer or other programmable data processing apparatus, produce an apparatus for implementing the functions/actions specified in one or more blocks in the flowcharts and/or block diagrams. These computer-readable program instructions may also be stored in a computer-readable storage medium, and these instructions cause the computer, the programmable data processing apparatus, and/or other devices to work in a specific manner, so that the computer-readable medium having the instructions stored thereon includes a product, which includes instructions for implementing various aspects of the functions/actions specified in one or more blocks in the flowcharts and/or block diagrams.

The computer-readable program instructions may be loaded onto a computer, other programmable data processing apparatus, or other device, causing a series of operational steps to be performed on the computer, other programmable data processing apparatus, or other device to produce a computer-implemented process, such that the instructions executed on the computer, other programmable data processing apparatus, or other device implement the functions/acts specified in one or more blocks in the flowcharts and/or block diagrams.

The flowcharts and block diagrams in the drawings show possible architectures, functions and operations of the system, method and computer program product implemented according to multiple implementations of the present disclosure. In this regard, each block in the flowcharts or block diagrams may represent a module, a program segment, or a part of an instruction, and the module, the program segment, or the part of the instruction contains one or more executable instructions for implementing the specified logical function. In some alternative implementations, the functions noted in the blocks may also occur out of the order noted in the figures. For example, two consecutive blocks may, in fact, be executed substantially in parallel, or the blocks may sometimes be executed in the reverse order, depending upon the functionality involved. It should also be noted that each block of the block diagrams and/or flowcharts, and combinations of blocks in the block diagrams and/or flowcharts, may be implemented by a dedicated hardware-based system that performs the specified functions or acts, or may be implemented by a combination of dedicated hardware and computer instructions.

Various implementations of the present disclosure have been described above, and the above description is illustrative, non-exhaustive, and not limited to the disclosed implementations. Many modifications and changes will be apparent to those of ordinary skill in the art without departing from the scope and spirit of the described implementations. The selection of terms used herein is intended to best explain the principles, practical applications or improvements of the implementations, or to enable other ordinary skill in the art to understand the various implementations disclosed herein.

## Claims

1. A method (500) of object detection, comprising:
extracting (510), by using an object detection model, a group of visual feature representations of a target image, the group of visual feature representations comprising respective visual feature representations of at least one object area in the target image; and
generating (520), by using a language model, a group of text sequences based on the group of visual feature representations, each text sequence indicating at least one category to which an object in an object area corresponding to the visual feature representation belongs.

2. The method (500) according to claim 1, wherein each output sequence of a group of output sequences has a predetermined length, and the at least one detection result corresponding to each object comprises a predetermined number of detection results that match the predetermined length.

3. The method (500) according to claim 1, wherein the language model outputs a group of output sequences by:
generating, for each visual feature representation, a text sequence corresponding to the visual feature representation based on a semantic correlation between the visual feature representation and a text feature representation of a category.

4. The method (500) according to claim 1, wherein generating (520), by using the language model, the group of text sequences based on the group of visual feature representations comprises:
performing, by using a visual-language feature adapter associated with the language model, a conversion on the group of visual feature representations to obtain a group of converted feature representations; and
obtaining, by providing the group of converted feature representations to the language model, the group of text sequences generated by the language model.

5. The method (500) according to claim 4, wherein the language model and the visual-language feature adapter are trained, and during a training process of the object detection model, parameters of the trained language model and the trained visual-language feature adapter are fixed.

6. The method (500) according to claim 5, wherein the object detection model comprises an image encoder and an image decoder, and the image encoder is trained and a parameter of the image encoder is fixed during the training process of the object detection model.

7. The method (500) according to claim 1, wherein the object detection model and the language model are jointly trained.

8. The method (500) according to claim 1, wherein at least the object detection model is trained by:
obtaining a first training dataset, the first training dataset comprising a first sample image, ground-truth position information of an object area in the first sample image, and a sample category to which an object belongs;
determining, by providing the first sample image to the object detection model and the language model, first estimated position information and a first estimated category of the object area in the first sample image; and
updating the object detection model based on a first distance loss between the first estimated position information and the ground-truth position information and a first semantic loss between the sample category and the first estimated category.

9. The method (500) according to claim 8, wherein at least the object detection model is trained by:
obtaining, by providing the first sample image to the updated object detection model and the language model, a pseudo-label category output by the language model, the pseudo-label category being different from the sample category;
determining, by providing the first sample image to the updated object detection model and the language model, second estimated position information and a second estimated category of the object area in the first sample image; and
updating the object detection model based on a second distance loss between the second estimated position information and the ground-truth position information, a second semantic loss between the sample category and the second estimated category and a second semantic loss between the pseudo-label category and the second estimated category.

10. The method (500) according to claim 1, further comprising:
providing an object detection result for the target image, the object detection result indicating the at least one object area that is located from the target object by the object detection model and a text sequence corresponding to each object area that is generated by the language model.

11. An apparatus (600) for object detection, comprising:
a visual feature extracting module (610) configured to extract, by using an object detection model, a group of visual feature representations of a target image, the group of visual feature representations comprising respective visual feature representations of at least one object area in the target image; and
a text sequence generating module (620) configured to generate, by using a language model, a group of text sequences based on the group of visual feature representations, each text sequence indicating at least one category to which an object in an object area corresponding to the visual feature representation belongs.

12. An electronic device (700), comprising:
at least one processing unit (710); and
at least one memory (720) coupled to the at least one processing unit (710) and storing instructions executable by the at least one processing unit (710), the instructions, when executed by the at least one processing unit (710), causing the device to perform the method according to any of claims 1 to 10.

13. A computer-readable storage medium having a computer program stored thereon, the computer program, when executed by a processor, implementing the method according to any of claims 1 to 10.

14. A computer program product being tangibly stored in a computer storage medium and comprising computer-executable instructions, the computer-executable instructions, when executed by a device, causing the device to perform the method of any of claims 1 to 10.
